# FASCICULE DE BREVET EUROPEEN

(11) **EP 2 794 510 B1**
(45) Date de publication et mention de la délivrance du brevet: **22.05.2019**
(21) Numéro de dépôt: 12816735.0
(22) Date de dépôt: 19.12.2012
(51) Int. Cl.: C04B 28/06

(54) **SUSPENSIONS AQUEUSES COMPRENANT UN CIMENT ALUMINEUX ET COMPOSITIONS LIANTES**
WÄSSRIGE SUSPENSIONEN MIT EINEM ALUMINIUMHALTIGEM ZEMENT UND BINDEMITTELZUSAMMENSETZUNGEN
AQUEOUS SUSPENSIONS INCLUDING AN ALUMINOUS CEMENT AND BINDING COMPOSITIONS

(30) Priorité: 19.12.2011 FR 1161918
(43) Date de publication de la demande: 29.10.2014
(73) Titulaire: Imertech, 75015 Paris (FR)
(72) Inventeur: TAQUET, Pascal, F-38540 Grenay (FR); ANDREANI, Pierre-Antoine, F-38780 Estrablin (FR); WATT, Véronique, F-38110 Saint Jean De Soudain (FR); REVEYRAND, Emilie, F-38510 Vezeronce Curtin (FR)
(74) Mandataire: Jacobacci Coralis Harle
(86) Numéro de dépôt international: PCT/FR2012/052999
(87) Numéro de publication internationale: WO 2013/093344

(56) Documents cités:
- EP-A1- 1 659 101
- JP-A- 2007 254 196
- KR-B1- 100 913 496
- US-A1- 2004 211 562
- US-A1- 2004 211 564
- US-A1- 2008 302 276

## Description

### Domaine de l'invention

La présente invention concerne des suspensions aqueuses comprenant un ciment alumineux et/ou un ciment sulfo-alumino calcique et des compositions liantes comprenant la suspension aqueuse en combinaison avec des liants organiques, stables à température ambiante et à température élevée ainsi que leurs procédés de préparation.

### Description de l'art antérieur

Les suspensions aqueuses comprenant des liants hydrauliques couramment appelées "slurry" se présentent sous la forme de suspension plus ou moins fluide. L'intérêt de telles suspensions est de constituer des solutions prêtes à l'emploi directement utilisables dans toutes applications de la chimie de la construction telles que la formulation d'adhésifs, la préparation des sols, les revêtements de sols, la pose du carrelage, la préparation des murs, les enduits de façade, la réparation du béton, les bétons prêts à l'emploi, les bétons projetés, les réseaux d'assainissement, l'imperméabilisation, la réparation des routes, la fixation, les systèmes d'ancrage, les peintures et revêtements et la préfabrication, et les applications réfractaires et péri-réfractaires.

La stabilisation consiste à stopper l'hydratation du liant hydraulique en ajoutant un agent bloquant (ou inhibiteur). Parmi les agents bloquants connus, l'acide borique et ses sels se sont avérés particulièrement efficaces pour stabiliser des suspensions aqueuses à base de liant hydraulique comprenant un ciment alumineux.

Les brevets EP 0241 230, EP 0 113 593, la demande de brevet EP 0081385 et le certificat d'utilité français FR 2763937 divulguent, par exemple, des compositions comportant un ciment alumineux en phase aqueuse retardé plusieurs mois par de l'acide borique ou l'un de ses sels en suspension dans l'eau.

L'utilisation de cet agent bloquant présente toutefois des inconvénients. Les suspensions aqueuses de ciment alumineux ne sont pas stables pendant des durées suffisantes à température élevée. Ce phénomène est encore plus marqué lorsque que ces suspensions aqueuses sont associées à des résines ou liants organiques. Ce phénomène s'amplifie davantage lorsque l'on utilise des proportions élevées de suspension aqueuse par rapport au mélange suspension aqueuse - liant organique.

Un autre désavantage de l'acide borique est qu'il présente une certaine toxicité et écotoxicité.

Les documents US 2004/211562 et US 2004/211564 décrivent une composition cimentaire comprenant en poids/poids_{ciment non hydraté}: 20 à 80% d'aluminate de calcium ; 20 à 80% d'une source de silice (cendre volante) ; 1 à 10% d'un phosphate soluble comme le polyphosphate de sodium, l'hexaméthaphosphate de sodium, le phosphate de sodium ou un de leurs mélanges ; 0,1 à 5% d'un agent retardateur de prise (acide carboxylique comme l'acide citrique ; l'acide tartrique) ; et 30 à 50 % d'eau pour obtenir un slurry pompable. Le phosphate soluble a pour fonction d'améliorer la résistance à la corrosion de la composition cimentaire. Les exemples du document US 2004/211562 montrent que les agents retardateurs testés retardent l'hydratation des compositions de ciment jusqu'à maximum 16 heures.

L'utilisation d'un acide carboxylique en tant qu'agent bloquant ne permet pas ainsi d'obtenir des suspensions aqueuses de ciment alumineux stables pendant des durées suffisantes, telles que par exemple un mois.

Le document JP 2007/254196 décrit une composition hydraulique comprenant : un ciment alumineux, un ciment Portland, du gypse (le total des trois composants égale 100 parties en poids), de l'eau et éventuellement, un modificateur de prise. Le modificateur de prise est du pyrophosphate sodique (Na₄P₂O₇) et/ou du tartrate de sodium.

Le document KR 100 913 496 décrit une composition de béton sec pour revêtement routier destinée à améliorer le drainage et la rétention d'eau. La composition est composée d'un liant et d'agrégats présentant un diamètre moyen entre 2,5 et 5 mm. En particulier, le liant est une composition sèche à base d'un clinker de sulfoaluminate de calcium, de gypse, d'un accélérateur d'intensité choisi par exemple parmi les carbonates ou les bicarbonates de métal alcalin et d'un agent retardateur.

Le document US 2008/302276 décrit une composition cimentaire sous forme de suspension aqueuse à prise rapide comprenant: un ciment hydraulique actif (ciment de Portland, aluminate de calcium, sulfate de calcium et des cendres volantes), des accélérateurs de prise, de l'eau et éventuellement des retardateurs de prise choisis parmi l'acide citrique, citrate de sodium, le tartrate de sodium ou le tartrate de potassium. Les accélérateurs de prise sont choisis parmi un mélange d'une alcanolamine et d'un phosphate ou d'un polyphosphates (trimétaphosphate de sodium, tripolyphosphate de sodium ou de potassium, le pyrophosphate de tétrapotassium ou de tétrasodium) qui agiraient en synergie. La prise rapide de la composition aqueuse s'effectue en mélangeant les différents composants à une température au-dessus de 32,2°C.

Par conséquent, il est nécessaire de trouver de nouveaux agents bloquants pour suspensions aqueuses comprenant un ciment alumineux et/ou un ciment sulfo-alumino calcique ne comportant pas les inconvénients ci-dessus mentionnés.

### Résumé de l'invention

La présente invention a donc pour but de fournir des suspensions aqueuses à base de ciment alumineux et/ou un ciment sulfo-alumino calcique qui présentent les propriétés suivantes :
- présenter une durée de vie élevée, c'est-à-dire que les suspensions aqueuses ne doivent pas faire prise lorsqu'elles sont conservées à une température allant d'environ 15°C (température ambiante) jusqu'à 55°C (températures élevées), pendant une période de plusieurs semaines à plusieurs mois, de préférence d'au moins un mois, mieux de deux mois ou plus et idéalement d'au moins 6 mois, afin de se garantir contre les délais de stockage ou de livraison, et
- conserver un caractère fluide et ne pas ségréger, notamment lors du transport, afin de garantir la mise en oeuvre sur chantier,
- pouvoir être associée en quantité importante à des résines organiques sans faire prise,
- présenter une faible toxicité et écotoxicité.

On entend par « durée de vie » au sens de l'invention, la durée pendant laquelle un composant reste sous la forme d'une suspension aqueuse de produits solides stable, pouvant revenir à l'état de suspension aqueuse par une simple agitation mécanique, sans faire prise.

Par « stable », on entend que la viscosité de la suspension aqueuse évolue peu au cours du stockage et que le système ne fait pas prise. Un des indicateurs utilisé pour suivre la stabilité du mélange est le pH de la suspension. Celui-ci doit rester relativement constant au cours de la période de stockage. Toute augmentation de pH peut s'interpréter comme un début de « déstabilisation » de la suspension.

L'invention a ainsi pour objet une suspension aqueuse stabilisée comprenant :
- au moins un liant hydraulique comprenant un ciment alumineux et/ou un ciment sulfo-alumino calcique et
- au moins un agent bloquant comprenant un composé contenant du phosphore choisi parmi l'acide métaphosphorique, l'acide phosphoreux, l'acide phosphorique, l'acide phosphonique et tous composés susceptibles de former l'un quelconque de ces composés par réaction avec de l'eau,
ladite suspension comprenant de 0,1% à 20%, de préférence 0,1 à 15 %, de préférence 0,1 à 10% et mieux 0,3 à 10% en masse de composé comprenant du phosphore par rapport à la masse totale de ciment alumineux et/ou de ciment sulfoalumino calcique,
ladite suspension aqueuse comprenant, en masse, par rapport à la masse totale de ladite suspension aqueuse :
- 20 à 80 % de ciment alumineux et 0 à 50 % de sulfate de calcium ;
- 20 à 60 % d'eau, et
- 0 à 5 % d'additifs.

Le demandeur a découvert de manière surprenante que les composés susmentionnés comprenant du phosphore pouvaient se substituer très efficacement à l'acide borique pour stabiliser des suspensions aqueuses comprenant des ciments alumineux et/ou des ciments sulfo-alumineux calciques.

Ces composés permettent notamment :
- d'obtenir un bon niveau de stabilisation à température ambiante,
- d'améliorer significativement la stabilisation des suspensions aqueuses à température élevée,
- de permettre d'associer selon n'importe quelles proportions, ces suspensions aqueuses stabilisées à des liants organiques, par exemple de type latex.

L'invention concerne également l'utilisation d'un agent bloquant pour retarder la prise d'une suspension aqueuse comprenant un liant hydraulique, le liant hydraulique comprenant au moins un ciment alumineux, caractérisé en ce qu'elle consiste à ajouter à ladite suspension aqueuse, au moins un agent bloquant comprenant un composé contenant du phosphore choisi parmi l'acide métaphosphorique, l'acide phosphoreux, l'acide phosphorique, les acides phosphoniques et tous composés susceptibles de former l'un quelconque de ces composés par réaction avec de l'eau, ledit composé comprenant du phosphore représentant 0,1 à 20% en masse par rapport à la masse totale de ciment alumineux,
ladite suspension aqueuse comprenant, en masse, par rapport à la masse totale de ladite suspension aqueuse : - 20 à 80 % de ciment alumineux et 0 à 50 % de sulfate de calcium ; - 20 à 60 % d'eau, et - 0 à 5 % d'additifs.

La présente invention concerne en outre une composition liante comprenant:
(i) une suspension aqueuse telle que décrite ci-dessus et
(ii) au moins un liant organique.

### Description détaillée de l'invention

Selon l'invention, les ciments alumineux sont des combinaisons d'oxyde d'aluminium Al₂O₃, représenté par A dans la notation cimentière, et d'oxyde de calcium CaO, représenté par C dans cette même notation cimentière, combinés en une ou plusieurs phases cristallisées et/ou amorphes, dans des proportions telles que la somme en masse des phases C+A représente au moins 20% à 100% de la masse totale du ciment alumineux.

Selon l'invention, on considère qu'un ciment alumineux présente une haute teneur en alumine (HTA) lorsque sa teneur en alumine est supérieure à 60% en masse par rapport à la masse totale du ciment alumineux.

Selon l'invention, on considère qu'un ciment alumineux présente une moyenne teneur en alumine (MTA) lorsque sa teneur en alumine est comprise entre 45% et 60% en masse par rapport à la masse totale du ciment alumineux.

Selon l'invention, on considère qu'un ciment alumineux présente une basse teneur en alumine (BTA) lorsque sa teneur en alumine est inférieure à 45% en masse par rapport à la masse totale du ciment alumineux.

Selon l'invention, les composés ou ciments sulfoalumineux calciques correspondent à des composés comprenant des oxydes de calcium (CaO, C dans la notation cimentière), d'aluminium (Al₂O₃, A dans la notation cimentière) et de souffre (S dans la notation cimentière) combinés en une ou plusieurs phases cristallisées et/ou amorphes, dans des proportions telles que la somme en masse des phases C+A+S représente au moins 10% à 100% de la masse totale des composés sulfoalumineux calciques.

L'invention concerne donc une suspension aqueuse stabilisée comprenant :
- au moins un liant hydraulique comprenant un ciment alumineux et/ou un ciment sulfo-alumino calcique et
- au moins un agent bloquant à base d'un composé comprenant du phosphore choisi parmi l'acide métaphosphorique, l'acide phosphoreux, l'acide phosphorique, l'acide phosphonique et tous composés susceptibles de former l'un quelconque de ces composés par réaction avec de l'eau,
ladite suspension comprenant de 0,1% à 20%, de préférence 0,1 à 15 %, de préférence 0,1 à 10% et mieux 0,3 à 10% en masse de composé comprenant du phosphore par rapport à la masse totale de ciment alumineux et/ou de ciment sulfoalumino calcique,
ladite suspension aqueuse comprenant, en masse, par rapport à la masse totale de ladite suspension aqueuse :
- 20 à 80 % de ciment alumineux et 0 à 50 % de sulfate de calcium ; f
- 20 à 60 % d'eau, et
- 0 à 5 % d'additifs.

De préférence, les proportions de ciment alumineux et/ou de ciment sulfoalumineux en masse par rapport à la masse totale de liant hydraulique sont supérieures à l'une quelconque des valeurs suivantes : 50%, 60 %, 70%, 80%, 90%, 95%, 99% ou égales à 100%.

Selon des variantes de l'invention, la suspension aqueuse peut comprendre :
- au moins un acide phosphonique et au moins un composé choisi parmi l'acide métaphosphorique, l'acide phosphoreux, l'acide phosphorique et tous composés susceptibles de former l'un quelconque de ces composés par réaction avec de l'eau,
- en outre un autre agent bloquant, cet autre agent bloquant peut être choisi parmi les acides minéraux tels que l'acide borique et ses sels et parmi les acides carboxyliques, les acides carboxyliques étant de préférence choisis parmi l'acide citrique, l'acide tartrique, les acides aminés (tels que l'acide aspartique et l'acide glutamique), l'acide mandélique, l'acide humique, l'acide fulvique, l'acide quinique,
- une combinaison :
   - d'au moins un acide phosphonique,
   - d'au moins un composé choisi parmi l'acide métaphosphorique, l'acide phosphoreux, l'acide phosphorique et tous composés susceptibles de former l'un quelconque de ces composés par réaction avec de l'eau et
   - d'au moins un acide carboxylique.

Lorsque la suspension aqueuse comprend en outre un agent bloquant autre qu'un composé comprenant du phosphore tel qu'un acide carboxylique, cet ou ces autres agents bloquants représentent :
- de 0,3 à 5 %, de préférence 0,3 à 2,5 % en masse de la masse totale de la suspension aqueuse ou
- de 0,3 à 9 %, de préférence 0,5 à 5 % en masse de la masse totale du liant hydraulique.

On comprend facilement que lorsque la suspension comprend en outre un agent bloquant autre qu'un composé comprenant du phosphore, les quantités de composés comprenant du phosphore pourront être minimales du fait de la présence de cet autre agent bloquant.

Par conséquent, selon un autre mode de réalisation avantageux de l'invention, la suspension la suspension aqueuse stabilisée peut comprendre :
- de 0,1% à 20%, de préférence 0,1 à 15%, de préférence 0,1 à 10% et mieux 0,3 à 10% en masse de composé comprenant du phosphore par rapport à la masse totale de ciment alumineux et/ou de ciment sulfo-alumino calciques,
- de 0,3 à 9%, de préférence 0,5 à 5 % en masse d'un agent bloquant autre qu'un composé comprenant du phosphore par rapport à la masse totale du liant hydraulique.

Il est particulièrement intéressant de noter que les composés comprenant du phosphore utilisés comme agent bloquant selon l'invention permettent de stabiliser tous types de ciment alumineux mais ils sont particulièrement efficaces lorsque le ciment alumineux utilisé est un ciment à haute teneur en alumine. En effet, le demandeur à découvert que les proportions minimales optimales de composés comprenant du phosphore pour obtenir une bonne stabilisation sont inversement proportionnelles aux quantités d'alumine dans le liant hydraulique ou dans le ciment alumineux et/ou sulfo-alumino calcique. De plus, dans le cas des ciments alumineux à haute teneur en alumine, on obtient une stabilisation pouvant être supérieure à 6 mois même lorsque les suspensions aqueuses sont conservées à 50°C.

En fonction du type de ciment alumineux du liant hydraulique, la suspension aqueuse de l'invention est préférentiellement définie de la façon suivante :
- lorsque le ciment alumineux est un ciment alumineux à haute teneur en alumine présentant une teneur en alumine supérieure à 60% en masse par rapport à la masse totale du ciment alumineux, la suspension comprend de 0,5 à 20 %, de préférence 0,5 à 15%, de préférence 0,5 à 10%, de préférence 0,5 à 5 % et mieux 0,5 à 2 % en masse de composé comprenant du phosphore par rapport à la masse totale de ciment alumineux à haute teneur en alumine,
- lorsque le ciment alumineux est un ciment alumineux à moyenne teneur en alumine présentant une teneur en alumine comprise entre 45 et 60% en masse par rapport à la masse totale du ciment alumineux, la suspension comprend de 2 à 20 %, de préférence 2 à 15%, de préférence 2 à 10%, de préférence 3 à 7 % et mieux 3 à 5 % de composé comprenant du phosphore par rapport à la masse totale de ciment alumineux à moyenne teneur en alumine,
- lorsque le ciment alumineux est un ciment alumineux à basse teneur en alumine présentant une teneur en alumine inférieure à 45% en masse par rapport à la masse totale du ciment alumineux, la suspension comprend de 5 à 20 %, de préférence 5 à 15%, de préférence 5 à 10 %, de préférence 6 à 9 % et mieux 8 à 9 % en masse de composé comprenant du phosphore par rapport à la masse totale de ciment alumineux à basse teneur en alumine.

La suspension comprend en masse par rapport à la masse totale de ladite suspension aqueuse :
- 20 à 80%, de préférence 50 à 70% et mieux 55 à 65% de ciment alumineux, et/ou
- 20 à 60%, de préférence 30 à 50% et mieux 35 à 45% d'eau, et/ou- 0 à 5 % d'additifs additionnels.

Selon l'invention, le composé comprenant du phosphore agissant comme agent bloquant peut être choisi parmi :
- l'acide métaphosphorique de formule brute HPO₃ (N° CAS : 37267-86-0).
- l'acide phosphoreux, également appelé acide orthophosphorique, composé chimique de formule H₃PO₃ (N° CAS : 10294-56-1),
- l'acide phosphorique de formule H3PO4 (N° CAS : 7664-38-2).
- les acides phosphoniques de formule HP(=O)(OH)₂ et ses dérivés P-hydrocarbylés (définition extraite du « Compendium de terminologie chimique, Recommandations IUPAC», préparé par Jean-Claude Richer),
- tous composés susceptibles de former l'un quelconque de ces composés par réaction avec de l'eau.

Des « composés susceptibles de former l'un quelconque de ces composés par réaction avec de l'eau » peuvent notamment correspondre à des composés aptes à former directement au contact de l'eau de l'acide métaphosphorique, l'acide phosphoreux, l'acide phosphorique, l'acide phosphonique et des ions hydronium (H₃O⁺), l'acide phosphoreux étant capable de se transformer en acide métaphosphorique au contact de l'eau.

Comme composés susceptibles de s'hydrolyser en acide phosphorique, on peut citer les composés suivants :
- le pentoxyde de phosphore ou anhydride phosphorique de formule brute P₄O₁₀ (N° CAS : 1314-56-3),
- l'acide pyrophosphorique, également appelé acide diphosphorique, est un composé chimique de formule H₄P₂O₇, (N° CAS : 2466-09-3),
- l'acide tripolyphosphorique de formule brute H₅P₃O₁₀, susceptible de s'hydrolyser en acide phosphorique (N° CAS : 10380-08-2).

On peut notamment citer les composés suivants parmi les dérivés hydrocarbylés convenant à l'invention : l'acide amino triméthylène phosphonique (ATMP, N°CAS 6419-19-8), AEPN : l'acide 2-aminoéthyle phosphonique, HEDP : l'acide 1-hydroxy éthylidène-1,1-diphosphonique, EDTMP : l'acide éthylène diamine tétraméthylène phosphonique, TDTMP : l'acide tétraméthylène diamine tétraméthylène phosphonique, HDTMP: l'acide hexaméthylène diamine tétraméthylène phosphonique, DTPMP: l'acide diéthylènetriamine pentaméthylène phosphonique, PBTC: l'acide phosphonobutane-tricarboxylique, PMIDA: l'acide N-(phosphonométhyl)iminodiacétique, CEPA : l'acide 2-carboxyéthyle phosphonique, HPAA : l'acide 2-hydroxyphosphonocarboxylique.

Comme cela sera démontré dans la partie exemple ci-dessous, le composé comprenant du phosphore agissant comme agent bloquant permet ainsi, à des doses relativement faibles, de bloquer la dissolution de la suspension aqueuse à base de ciment alumineux. La suspension aqueuse est ainsi stabilisée sur de longues périodes (supérieures à 1 mois) et y compris à des températures relativement élevées (par exemple 50°C).

Le composé comprenant du phosphore permet également d'abaisser significativement le pH de la suspension aqueuse. Avantageusement, le pH de ladite suspension aqueuse stabilisée est inférieur à 9, de manière plus avantageuse inférieure à 8 et en particulier inférieur à 7, notamment inférieur à 6,5.

Selon certains modes de réalisation, le composé comprenant du phosphore présente un pka inférieur à 9, notamment inférieur à 8, de tels composés adaptés à la mise en oeuvre de l'invention pourront en particulier présenter un pKa inférieur à 7, voire inférieur à 6,8.

Or, comme décrit ci-dessus, les agents bloquants décrits dans l'art antérieur, tels que les acides carboxyliques ou les sels de phosphates ne permettent pas de bloquer la dissolution du liant hydraulique sur des périodes aussi longues que celles du composé comprenant du phosphore selon l'invention.

Le Demandeur a, par exemple, calculé qu'une suspension aqueuse comprenant en poids/poids total suspension :
- 58,5% d'aluminates de calcium, 36,5% d'eau, 3,7% de tripolyphosphate de sodium et 1,3 % d'autres adjuvants, ou
- 57% d'aluminates de calcium, 35,7% d'eau, 6,1% d'hexametaphosphate de sodium (HMPNa) et 1.2 % d'autres adjuvants, ou
- 58,4% d'aluminates de calcium, 36,5% d'eau, 3.9% de phosphate trisodique et 1.2 % d'autres adjuvants, ou
- 58,5% d'aluminates de calcium, 36,6% d'eau, 3,6% d'hydrogénophosphate et 1.3% d'autres adjuvants,
permettait de bloquer la prise hydraulique que pendant, respectivement, moins de 18 heures à 50°C et 2 jours à température ambiante (25°C); moins de 17 heures à 50°C ou à température ambiante; moins de 18 heures à 50°C et moins de 48 heures à température ambiante ; moins de 24 heures à 50°C et moins de 4 jours à température ambiante.

Des adjuvants présents dans les suspensions comprennent par exemple des dispersants ou des épaississants connus de l'homme du métier.

De même, le Demandeur a calculé que l'acide tartrique ou l'acide citrique permettent de stabiliser une suspension aqueuse à base de ciment hydraulique (aluminate ou sulfo -aluminate de calcium) seulement pendant 18 heures à 50°C et 6 jours à température ambiante (25°C).

L'agent bloquant comprenant le composé phosphore selon l'invention présente, par conséquent, un effet inattendu et surprenant par rapport aux agents bloquants décrits dans l'art antérieur.

Lorsque le ciment alumineux est un ciment à haute teneur en alumine, on considère que pour obtenir une durée de vie d'au moins six mois, il faut de préférence environ de 1 à 10 % en masse de composé comprenant du phosphore par rapport à la masse totale de ciment alumineux.

De préférence, le ciment alumineux à haute teneur en alumine utilisé selon l'invention présente une teneur en alumine comprise entre 65% et 75 % et mieux comprise entre 68% et 72% en masse par rapport à la masse totale du ciment alumineux.

De préférence, la composition chimique du ciment alumineux à haute teneur en alumine, définie en masse par rapport la masse totale du ciment alumineux est la suivante :
- Al₂O₃ : > 60%, de préférence de 60 - 75%,
- CaO : > 25%, de préférence de 25 - 50%,
- SiO₂ : < 5 %, de préférence < 4 % et mieux < 2 %,
- Fe₂O₃ : < 10%, de préférence de < 5 % et mieux <1 %.

Les ciments alumineux comprennent en général une phase minéralogique cristallisée choisie parmi CA, C12A7, C3A, CA2, C2AS, les ferrites; une phase amorphe ou un mélange d'une ou plusieurs desdites phases minéralogiques cristallisées et/ou d'une phase amorphe.

Selon l'invention, le liant hydraulique peut comprendre en outre des sulfates de calcium. Les sulfates de calcium peuvent provenir d'un composé choisi parmi les anhydrites, les semi-hydrates de type plâtre, le gypse et leurs mélanges.

La suspension aqueuse peut comprendre en masse par rapport à la masse totale de suspension aqueuse, 0 à 50 %, de préférence 5 à 30 % de sulfate de calcium.

L'utilisation conjointe de ciment alumineux et de sulfates de calcium est susceptible de former un liant ettringitique. Par liant ettringitique, on entend un liant dont les composants donnent, lors de l'hydratation dans les conditions normales d'utilisation, comme hydrate principal l'ettringite, qui est un trisulphoaluminate de calcium répondant à la formule 3CaO.Al₂O₃.3CaSO₄.32H₂O.

Selon un mode de réalisation de l'invention, la suspension aqueuse comprend un liant hydraulique comprenant en masse par rapport à la masse totale des composants formant le liant hydraulique :
- 0 à 50%, de préférence 1 à 35 et mieux 5 à 30% de sulfates de calcium,
- 50 à 100%, de préférence 50 à 99% et mieux 70 à 95% de ciment alumineux.

Les ciments alumineux ou sulfoalumineux calciques utilisés selon l'invention comprennent de préférence une surface spécifique Blaine supérieure ou égale à 1500 cm²/g, de préférence comprise entre 2000 et 6000 cm²/g et mieux comprise entre 3000 et 4500 cm²/g.

La suspension aqueuse peut également comprendre des additifs additionnels. Ces additifs sont de préférence choisis parmi les dispersants, les agents rhéologiques et les agents biocides mais peuvent inclure également les superplastifiants, les agents anti-mousses et les épaississants.

Comme agent dispersant utilisable selon l'invention, on peut citer le Sokalan® CP10, commercialisé par la société BASF, l'Optima®206 ou le Premia®196 commercialisés par la société Chryso. Le dispersant représente en général :
- de 0,1 à 3 %, de préférence 0,5 à 1% en masse de la masse totale de la suspension aqueuse ou
- de 0,1 à 5 %, de préférence 0,6 à 1,8% en masse de la masse totale du liant hydraulique.

Le ou les agents rhéologiques sont de préférence choisis parmi des produits organiques tels que la gomme Xanthane, la gomme Welan, gomme DIUTAN®, les éthers d'amidon, les éthers de guar, le polyacrylamide, le carraghénane, l'agar agar, ou des produits minéraux tels que les argiles (la Bentonite par exemple) et leurs mélanges.

Le ou les agents rhéologiques représentent en général :
- de 0,1 à 1 %, de préférence 0,25 à 0,5% en masse de la masse totale de la suspension aqueuse ou
- de 0,2 à 2%, de préférence 0,25 à 3,4% en masse de la masse totale du liant hydraulique.

La composition selon l'invention peut également comprendre un agent anti-bactérien. Comme agent anti-bactérien ou biocide utilisable selon l'invention, on peut utiliser des composés de la famille des isothiazolinones tels que la méthylisothiazolinone (MIT) et la benzisothiazolinone (BIT) ainsi que leur mélange. On peut notamment citer le produit ECOCIDE® K35R, commercialisé par la société PROGIVEN et le produit Nuosept® OB03 commercialisé par la société ISP. L'agent anti-bactérien représente alors de préférence :
- de 0,005 à 0,1 %, de préférence 0,01 à 0,02 % en masse de la masse totale de la suspension aqueuse ou
- de 0,01 à 0,2 %, de préférence 0,02 à 0,04 % en masse de la masse totale du liant hydraulique.

Les superplastifiants sont de préférence choisis dans la famille des polyphosphonates polyox, des polycarboxylates polyox PCP et des polyacrylates ou des copolymères d'acides acryliques et acides alkoxy-acrylique, et leurs mélanges. Les superplastifiants de type polycarboxylate polyox sont des composés connus et notamment décrit dans les brevets US 2003/0127026 et US 2004/0149174. Les polyphosphonate polyox sont notamment décrits dans les brevets FR-A-2810314 et FR-A-2696736 ainsi que FR-A-2689895. Ces superplastifiants sont des produits disponibles dans le commerce. A titre d'exemple, on peut citer les produits OPTIMA 100® et PREMIA 150®, commercialisés par la société CHRYSO, ou MELMENT F10®, MELFLUX® commercialisés par la société SKW ou encore le Sokalan® CP 10 commercialisé par la société BASF.

D'autres additifs additionnels tels que des agents anti-mousses comme le Defoam® 50PE commercialisé par la société Peramin, peuvent être introduits dans la formulation de la suspension aqueuse.

L'extrait sec de la suspension aqueuse est donc de préférence supérieur à 50% et mieux compris entre 55 à 80%.

La suspension aqueuse de l'invention peut être associée à des liants organiques de façon à former des compositions liantes.

L'invention concerne donc également une composition liante comprenant :
(i) une suspension aqueuse telle que définie ci-dessus et
(ii) au moins un liant organique.

De préférence, cette composition liante peut comprendre en masse par rapport à la masse totale des composants (i) et (ii) :
- 10 à 90% de suspension aqueuse,
- 10 à 90% de liant organique.

Les liants organiques utilisés selon l'invention sont de préférence des résines polymériques comprenant des polymères et copolymères de type latex.

Enfin, la suspension aqueuse de l'invention peut être associée à des charges pour former d'autres compositions. Ces compositions comprennent donc
(i) une suspension aqueuse telle que définie ci-dessus et
(ii) au moins une charge.

Les charges peuvent être minérales ou organiques et choisies parmi des composés siliceux (sable, quartz, fumée de silice), carbonatés (carbonate de calcium, dolomite), des pigments, des oxydes de titane, des charges légères du type perlite ou vermiculite.

De préférence, les charges représentent en masse par rapport à la masse totale de la composition 1 à 50 %, de préférence 10 à 30 %. Le reste est constitué de la suspension aqueuse.

Pour déclencher la prise de la suspension aqueuses ou de la composition liante, il suffit d'ajouter un agent modificateur de pH de façon à augmenter le pH du milieu à une valeur supérieure à 9, de préférence supérieure à 7 (au-delà de cette valeur plus le pH est élevé plus la cinétique de la réaction de déblocage est rapide) et rendre ainsi inopérant l'agent bloquant du ciment alumineux ou du ciment sulfoalumino-calcique avec éventuellement une source de lithium additionnelle.

Les combinaisons possibles sont exemplifiées dans le brevet FR 2 918 055 décrivant un système déclencheur à base de lithium, hydroxyde de lithium et sulfate ou carbonate de lithium ou dans le brevet FR 2 763 937 décrivant un système déclencheur associant une chaux hydratée et un sel de sodium et de fluorure, sulfate ou carbonate. D'autres combinaisons peuvent être envisagées. On peut notamment utiliser comme agent modificateur de pH de l'hydroxyde de sodium ou de potassium ou encore de l'aluminate de sodium en combinaison avec un accélérateur pouvant être un sel de lithium, ou encore un sel de sodium ou de potassium du type sulfate, carbonate, chlorure ou fluorure.

L'invention concerne encore un procédé de fabrication d'une suspension aqueuse telle que définie précédemment.

Selon l'invention, ce procédé comprend successivement les étapes suivantes:
- introduction de l'eau dans une cuve de mélange,
- mise sous agitation de préférence à une vitesse supérieure à 600 tours/min, de préférence supérieure à 800 tours/min et mieux de 1000 tours/min, de préférence avec un agitateur rayneri muni d'une pâle défloculeuse,
- ajout du composé comprenant du phosphore et de préférence mélange jusqu'à dissolution complète,
- éventuellement ajout du ou des agents dispersants,
- ajout du ou des liants hydrauliques, de préférence de manière progressive,
- maintien de l'agitation et de préférence augmentation de la vitesse d'agitation à plus à 1000 tours/min, de préférence 3000 tours/min,
- éventuellement ajout des autres composants, c'est-à-dire éventuellement du ou des agents rhéologiques et des agents biocides,
- agitation pendant au moins 5 minutes, de préférence pendant 10 à 15 minutes.

Lorsque la suspension aqueuse est associée au liant organique pour former une composition liante, de préférence les liants organiques sont ajoutés sous agitation soit directement à l'issue de la préparation de la suspension aqueuse soit par simple mélange réalisé à postériori, de préférence à une vitesse de 600 tours/min. Le procédé de préparation de la composition liante comprend, par rapport au procédé de préparation de la suspension aqueuse, une étape supplémentaire d'ajout des liants organiques sous agitation soit directement à l'issu de la préparation de la suspension aqueuse, par exemple lors de l'introduction des autres composants, soit par simple mélange réalisé à postériori.

L'invention peut être utilisée par exemple en revêtement de surface obtenu à partir de la suspension aqueuse définie ci-dessus.

Enfin, l'invention concerne l'utilisation d'un agent bloquant pour retarder la prise d'une suspension aqueuse comprenant un liant hydraulique, le liant hydraulique comprenant au moins un ciment alumineux, caractérisé en ce qu'elle consiste à ajouter à ladite suspension aqueuse, au moins un agent bloquant comprenant un composé contenant du phosphore choisi parmi l'acide métaphosphorique, l'acide phosphoreux, l'acide phosphorique, les acides phosphoniques et tous composés susceptibles de former l'un quelconque de ces composés par réaction avec de l'eau, ledit composé comprenant du phosphore représentant 0,1 à 20%, de préférence 0,1 à 15%, de préférence 0,1 à 10% et mieux 0,3 à 10% en masse par rapport à la masse totale de ciment alumineux.

Selon cette utilisation, la suspension aqueuse peut présenter toutes caractéristiques définies ci-dessus.

Le retard de la prise de la suspension aqueuse permet également de retarder la prise d'une composition liante comprenant :
i) une suspension aqueuse comprenant un liant hydraulique, le liant hydraulique comprenant au moins un ciment alumineux ou un ciment sulfo-alumino calcique, et
ii) au moins un liant organique.

Cela consiste à ajouter à ladite suspension aqueuse, au moins un composé comprenant du phosphore choisi parmi l'acide métaphosphorique, l'acide phosphoreux, l'acide phosphorique, les acides phosphoniques et tous composés susceptibles de former l'un quelconque de ces composés par réaction avec de l'eau, ledit composé comprenant du phosphore représentant 0,1 à 20%, de préférence 0,1 à 15%, de préférence 0,1 à 10% et mieux 0,3 à 10% en masse par rapport à la masse totale de ciment alumineux et/ou de ciment sulfo alumino calcique.

Les exemples suivants illustrent l'invention sans la limiter.

### Exemple

### A. Préparation des compositions

### I. Produits utilisés

**1. Généralité**

| **Fonction** | **Nature** | **Produit** |
|---|---|---|
| Solvant | Eau | Eau |
| Agent bloquant | Acide | Acide Borique |
| | | Acide phosphorique |
| Dispersant | Polyacrylate de Sodium | Sokalan® CP10 |
| Ciment alumineux | Aluminate de Calcium | Ternal® White |
| | | Ternal® RG |
| | | Ternal® EV |
| | | Secar® 51 |
| | | Fondu® Fos |
| Sulfate de calcium | - Anhydrite | |
| | - Semihydrate | |
| Agent rhéologique | Gomme Xanthane | Rhodopol® G |
| Biocide | isothiazolinones | Ecocide® K35R |
| | | Nuosept® OB03 |
| Liant organique | styrène acrylique | Acronal® S 790 BASF |

**2. Composition chimique et minéralogique des ciments**

| | Ternal® White | Ternal® RG | Secar® 51 | Fondu® |
|---|---|---|---|---|
| **Phases Minéralogiques*** | | | | |
| C12A7/CA | <0,03 | <0,06 | - | - |

| **Composition Chimique** | HTA | BTA | MTA | BTA |
|---|---|---|---|---|
| Alumine (Al203) % | 68,7 - 70,5 | 38,0 - 41,0 | 50,8 - 54,2 | 37,5 - 41 |
| Chaux (CaO) % | 28,5 - 30,5 | 35,3 - 37,9 | 35,9 - 38,9 | 35,5 - 39 |
| Silice (SiO2) % | 0,2 - 0,6 | 3,5 - 5,0 | 4,0 - 5,5 | 3,5 - 5,5 |
| Fer (Fe203) % | 0,1 - 0,3 | 14,5 - 17,5 | 1,5 - 2,5 | 13 - 17,5 |
| **Blaine** - SSB (cm2/g) | 3800 - 4400 | 2950 - 3350 | 3750 - 4250 | 2850 - 3450 |

### II. Procédé de préparation

Les conditions de mélange ainsi que l'ordre d'introduction des composants permettent d'améliorer considérablement la qualité de la suspension aqueuse. De préférence, les composants sont mélangés dans l'ordre suivant :
1) Solvant,
2) Agent bloquant
3) Dispersant
4) Ciment
5) Agent rhéologique
6) Biocide

Le protocole opératoire de mélange est le suivant:
- peser la quantité d'eau nécessaire et introduire l'eau dans une cuve de mélange (bol), fixer l'agitation à 1000 tr/min, pale en position haute,
- ajouter l'agent bloquant (ou inhibiteur), mélanger jusqu'à dissolution de l'agent bloquant (maximum 3 min),
- ajouter le composant suivant, c'est à dire le dispersant,
- ajouter le ou les liants hydrauliques, lors de leur incorporation, la pale est positionnée à la surface de la suspension aqueuse afin d'optimiser la dispersion,
- mélanger environ 1 minute pale en position haute,
- augmenter la vitesse à 3000 tr/min et ajouter les derniers composants,
- arrêter le malaxeur, racler les parois du bol et la pale pour éliminer les dépôts résiduels,
- malaxer 15 minutes à grande vitesse, pale en position basse.

Il est important de noter que ces conditions de préparation permettent de disperser et d'homogénéiser efficacement la suspension aqueuse.

### B. Caractérisation

### I. Suspension aqueuse ou slurry minéral à base de Ternal® White

| **Dosage (%)*** | Slurry 1 | Slurry 2 | Slurry 3 | Slurry 4 | Slurry 5 |
|---|---|---|---|---|---|
| Solvant | 36,925 | 38,115 | 39,005 | 38,805 | 38,305 |

| Inhibiteur (agent bloquant) : | | | | | |
|---|---|---|---|---|---|
| - Acide Borique | 2,38 | - | - | - | - |
| - Acide phosphorique (dilué à 85%) | - | 1,19 | 0,3 | 0,5 | 1 |
| Dispersant | 1 | 1 | 1 | 1 | 1 |
| Ciment | 59,38 | 59,38 | 59,38 | 59,38 | 59,38 |
| Agent rhéologique | 0,3 | 0,3 | 0,3 | 0,3 | 0,3 |
| Biocide | 0,015 | 0,015 | 0,015 | 0,015 | 0,015 |
| Total | 100% | 100% | 100% | 100% | 100% |

| | | | | | |
|---|---|---|---|---|---|
| * Les proportions définies sont en masse par rapport à la masse totale de la suspension aqueuse. | | | | | |

### 1. Suivi de la stabilité par mesure du pH

La mesure de pH est un bon indicateur du suivi de la stabilité d'une suspension aqueuse. Une suspension aqueuse stabilisée par de l'acide borique est considérée comme instable si son pH augmente de façon significative et/ou atteint le pKa de l'acide borique (pKa=9,2). A partir de cette valeur, la prise hydraulique se déclenche.

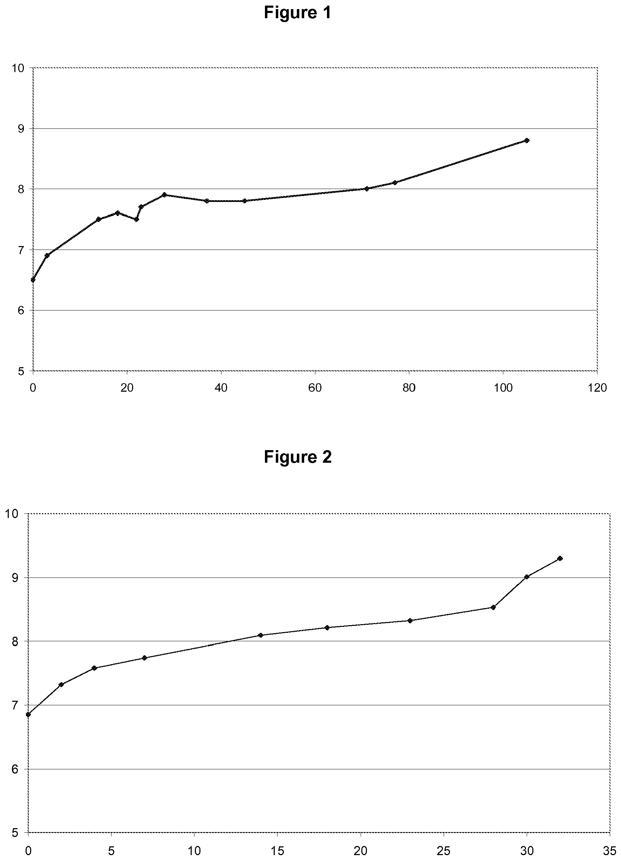

Les figures 1 et 2 représentent pour le slurry 1 l'évolution du pH en fonction du temps (en jours). La figure 1 représente l'évolution du pH pour une suspension aqueuse maintenue à température ambiante et la figure 2 représente l'évolution du pH pour une suspension aqueuse maintenue à 50°C.

A température ambiante, le pH initial du slurry 1 est autour de 8, au fil des mois, il augmente progressivement pour atteindre la valeur seuil de 9. Dans l'intervalle 8<pH<9, le slurry 1 est stable sur une durée de plusieurs mois. En revanche, à une température de 50°C, ce mécanisme est très nettement accéléré. En effet l'augmentation de pH est observée dès les premiers jours de stockage, la valeur seuil de 9,2 est atteinte au bout de 30 jours, le slurry 1 faisant prise à 32 jours.

Le temps de conservation des slurries stabilisés à l'acide borique excède largement 6 mois lorsqu'ils sont stockés à température ambiante. En revanche, dès que les conditions de stockage varient (température de 50°C), les temps de stockage diminuent significativement.

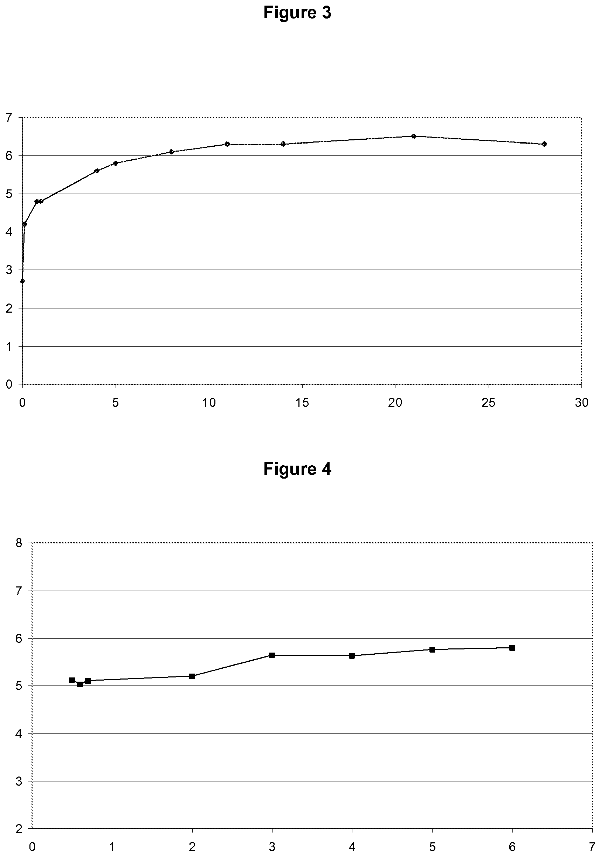

Les figures 3 et 4 représentent pour le slurry 2 l'évolution du pH en fonction du temps en jours (figures 3) et en mois (figures 4). La figure 3 représente l'évolution du pH pour une suspension aqueuse maintenue à température ambiante et la figure 4 représente l'évolution du pH pour une suspension aqueuse maintenue à 50°C.

A température ambiante, le pH initial du slurry 2 est autour de 4. Une remontée progressive est ensuite observée sur une durée de 10 jours, le pH se stabilisant autour de 6,4. A cette valeur le slurry est parfaitement stable.

A une température de 50°C, le pH reste très constant et centré autour d'une valeur comprise entre 5 et 6 unités de pH. A cette valeur de pH, le slurry 2 est parfaitement stable même après 45 jours de stockage à 50°C. Ceci est confirmé par la figure 4 présentant le suivi des pH à 50°C réalisé au cours des 6 derniers mois. Les résultats montrent que le pH n'évolue pas, le slurry 2 est parfaitement stable après 6 mois de stockage à 50°C, aucune prise n'est observée.

### 2. Optimisation des concentrations

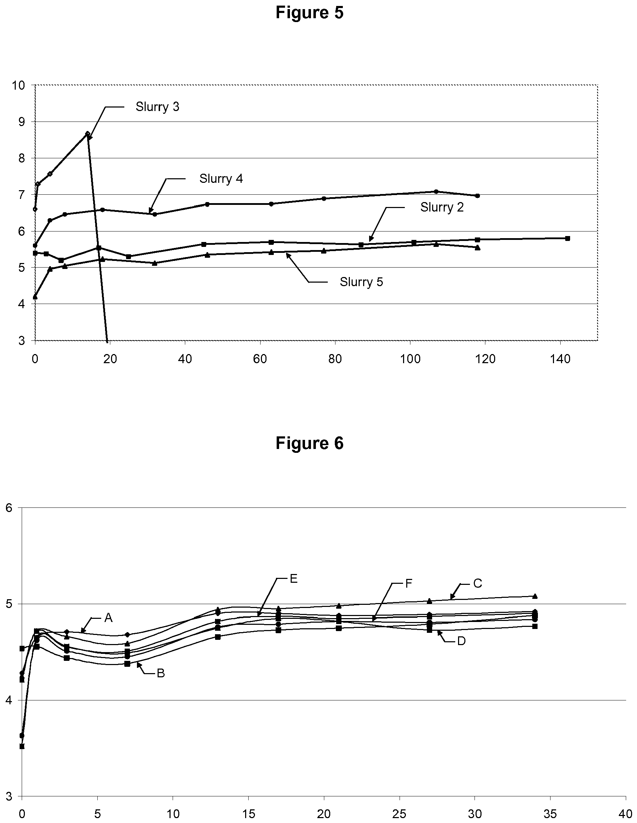

La figure 5 représente pour les slurries 2 à 5 maintenus à 50°C l'évolution du pH en fonction du temps (en jours). On constate que lorsque l'on utilise l'acide phosphorique comme agent stabilisant, les proportions d'acide phosphorique peuvent être abaissées jusqu'à moins de 0,5% en masse par rapport à la masse totale de la suspension aqueuse tout en conservant une durée de stabilité correcte à 50°C.

### II. Suspensions aqueuses à base de systèmes ettringittiques

### 1. Préparation des compositions

Dans ces essais, différents « slurries ettringittiques » ont été réalisés en faisant varier les taux de sulfate et le type de sulfate utilisé. Le système stabilisant utilisé est l'acide phopshorique au dosage de 1,2% en masse par rapport à la masse totale de la suspension aqueuse. Le ciment alumineux utilisé est le Ternal® White. Le taux de liant hydraulique dans la suspension aqueuse est de 60% en masse par rapport à la masse totale de la suspension aqueuse.

| **Slurry (Dosage (%)*)** | A | B | C | D | E | F |
|---|---|---|---|---|---|---|
| Solvant | 37,485 | 37,485 | 37,485 | 37,485 | 37,485 | 37,485 |
| Acide phosphorique dilué à 85% | 1,2 | 1,2 | 1,2 | 1,2 | 1,2 | 1,2 |
| Dispersant | 1 | 1 | 1 | 1 | 1 | 1 |

| Ciment : | | | | | | |
|---|---|---|---|---|---|---|
| - Ternal® white | 42 | 42 | 51 | 51 | 57 | 57 |
| - anhydrite | 18 | - | 9 | - | 3 | - |
| - semihydrate | - | 18 | - | 9 | - | 3 |
| Agent rhéologique | 0,30 | 0,3 | 0,3 | 0,3 | 0,3 | 0,3 |
| Biocide | 0,015 | 0,015 | 0,015 | 0,015 | 0,015 | 0,015 |
| Total | 100% | 100% | 100% | 100% | 100% | 100% |

La figure 6 représente pour les slurries A à F maintenus à 50°C, l'évolution du pH en fonction du temps (en jours). Le suivi de l'évolution des pH confirme que tous les slurries ettringittiques sont parfaitement stabilisés avec l'acide phosphorique.

### III. Compositions liantes à base de suspension aqueuse-liant organique

### 1. Préparation des compositions

Dans ces essais, on utilise les slurries 1 et 2 stabilisés respectivement avec de l'acide borique et de l'acide phosphorique et un liant organique de type latex.

| Composition | % de Slurry 1 | % de liant organique | Composition | % de Slurry 2 | % de liant organique |
|---|---|---|---|---|---|
| C1-0 | 0 | 100 | C2-0 | 0 | 100 |
| C1-1 | 10 | 90 | C2-1 | 10 | 90 |
| C1-2 | 20 | 80 | C2-2 | 20 | 80 |
| C1-3 | 30 | 70 | C2-3 | 30 | 70 |
| C1-4 | 40 | 60 | C2-4 | 40 | 60 |
| C1-5 | 50 | 50 | C2-5 | 50 | 50 |
| C1-6 | 60 | 40 | C2-6 | 60 | 40 |
| C1-7 | 70 | 30 | C2-7 | 70 | 30 |
| C1-8 | 80 | 20 | C2-8 | 80 | 20 |
| C1-9 | 90 | 10 | C2-9 | 90 | 10 |
| C1-10 | 100 | 0 | C2-10 | 100 | 0 |

### 2. Caractérisation

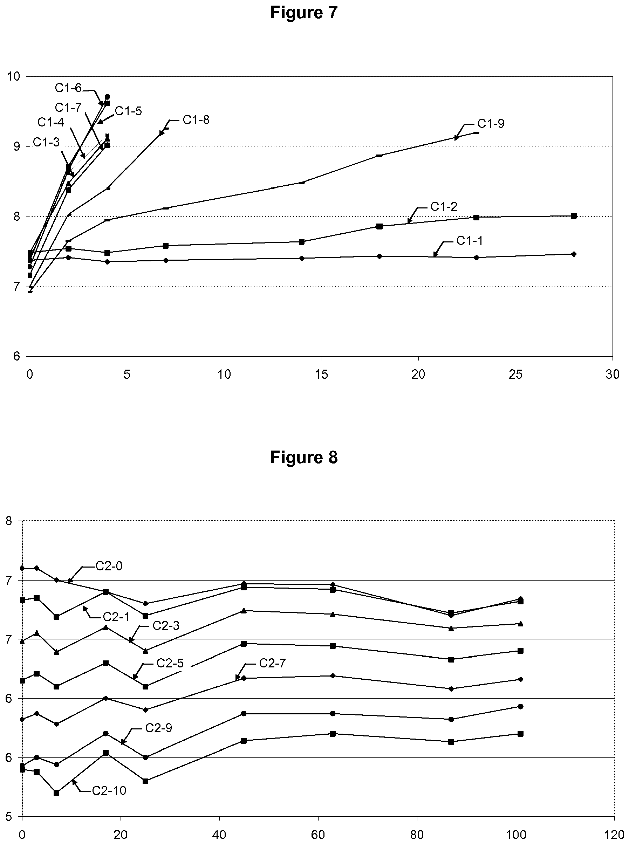

La stabilité à 50°C des compositions C1-0 à C1-10 a été caractérisée. Les compositions sont stockées à 50°C et les pH sont mesurés à échéances régulières. La figure 7 représente le suivi des pH de certaines de ces compositions en fonction du temps (jours). On constate qu'après 28 jours de stockage à 50°C, seules les compositions C1-1 et C1-2 conservent des pH inférieurs à 9,2 et sont donc parfaitement stables. Toutes les autres compositions font prise avant 28 jours. La zone de stabilité des mélanges des compositions à base de suspensions stabilisées par de l'acide borique est donc considérablement restreinte, elle permet d'introduire au maximum 20 % en masse de slurry 1 dans la composition la composition liante.

Le temps de conservation des slurries stabilisés à l'acide borique excède largement 6 mois lorsqu'ils sont stockés à température ambiante. En revanche, dès que l'environnement chimique est modifié, par exemple par mélange avec des latex, les temps de stockage diminuent significativement.

La stabilité à 50°C des compositions C2-0 à C2-10 a également été caractérisée. Les compositions sont stockées à 50°C et les pH sont mesurés à échéances régulières. La figure 8 représente le suivi des pH de ces différentes compositions en fonction du temps (jours).

Les résultats obtenus montrent des valeurs de pH très stables dans une zone variant entre 5 et 7 unité de pH, et ce pendant plus de 40 jours. Aucun des mélanges ne fait de prise durant cette période.

En conclusion, les slurries stabilisés à l'acide phosphorique montrent des résultats très satisfaisant quelque soit la température de stockage et l'environnement chimique du slurry comparativement aux slurries stabilisés à l'acide borique. Ces résultats sont obtenus pour des rapports acide/liant divisés par 2. L'ensemble de ces données illustre l'intérêt de la stabilisation des slurries d'aluminate de calcium par de l'acide phosphorique.

### IV. Suspension aqueuse à base d'autres ciments alumineux

### 1. Préparation des compositions

| **Slurries (Dosage (%)*)** | Slurry 6 | Slurry 7 | Slurry 8 | Slurry 9 |
|---|---|---|---|---|
| Solvant | 36,185 | 33,685 | 36,185 | 33,685 |
| Acide phosphorique (dilué à 85%) | 2,5 | 5 | 2,5 | 5 |
| Dispersant | 1 | 1 | 1 | 1 |

| Ciment : | | | | |
|---|---|---|---|---|
| - Ternal® RG | | | 60 | 60 |
| - SECAR 51 | 60 | 60 | - | - |
| Agent rhéoloqique | 0,3 | 0,3 | 0,3 | 0,3 |
| Biocide | 0,015 | 0,015 | 0,015 | 0,015 |
| Total | 100% | 100% | 100% | 100% |

### 2. Suivi de la stabilité

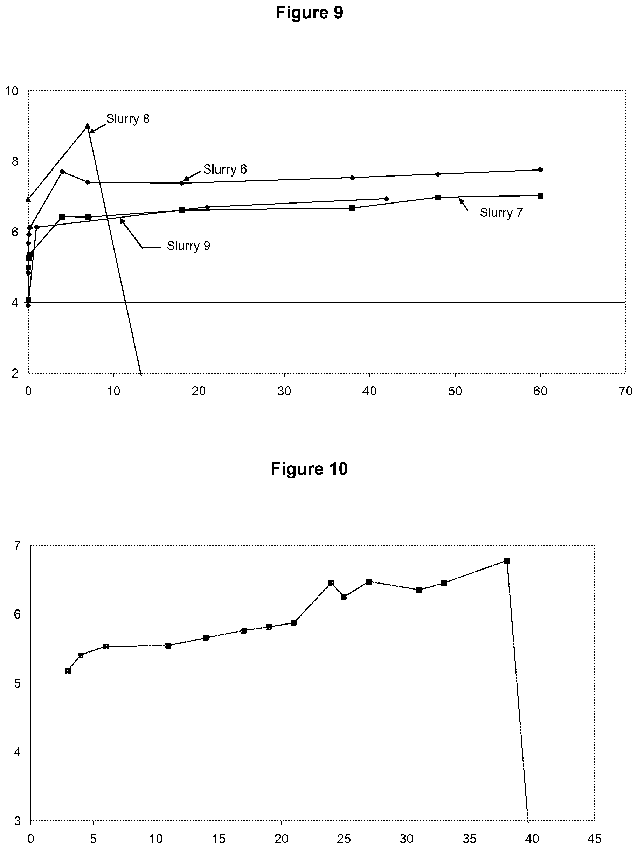

La figure 9 représente pour les slurries 6 à 9 maintenus à 50°C l'évolution du pH en fonction du temps (en jours). Concernant les slurries réalisés avec le Secar® 51 (référencés 6 et 7), on constate que quelque soit le dosage d'acide phosphorique utilisé (2,5 % ou 5 % en fonction de la suspension aqueuse, soit 3,5 % ou 7 % en formulant le pourcentage en fonction du poids de liant hydraulique), le pH est stable durant 2 mois (60 jours). Par contre, pour les slurries réalisés avec le Ternal® RG (référencé 8 et 9), on constate que le dosage d'acide phosphorique utilisé, 2,5 % ou 5 % en fonction de la suspension aqueuse (soit 3,5 % ou 7 % en formulant le pourcentage en fonction du poids de liant hydraulique) impacte la stabilité du slurry. Dans le cas d'un dosage de 7 % en formulant le pourcentage en fonction de la masse de liant hydraulique, on observe une bonne stabilité du slurry pendant 1,5 mois (45 jours). En conclusion il est observé que lorsque l'on utilise l'acide phosphorique comme agent bloquant, ces slurries peuvent être stabilisés pendant des durées allant de 20 jours à 2 mois en fonction du dosage en acide phosphorique et du type de ciment alumineux associé.

### V. Utilisation d'un système mixte acide phophorique / acide phosphonique / acide citrique

Dans ces essais une combinaison d'un acide phosphonique, d'un acide phosphorique et d'un acide carboxylique, l'acide citrique a été utilisé. Le produit Dequest® 2000 correspond à l'ATMP (l'acide amino triméthylène phosphonique).

### 1. Composition testée

| **Slurries Dosage (%)*** | Slurry 10 | Slurry 11 | Slurry 12 |
|---|---|---|---|
| Solvant | 34,79 | 34,94 | 34,54 |
| Acide phosphorique (dilué à 85%) | 1 | 1,6 | 1,8175 |
| Dequest® 2000 | 2,4 | 1,5 | 1,325 |
| Acide citrique | 0,5 | 0,65 | 1 |
| Dispersant | 1 | 1 | 1 |
| Ciment : SECAR® 51 | 60 | 60 | 60 |
| Agent rhéologique | 0.3 | 0.3 | 0.3 |
| Biocide | 0,015 | 0,015 | 0,015 |
| Total | 100% | 100% | 100% |

### 2. Suivi de la stabilité

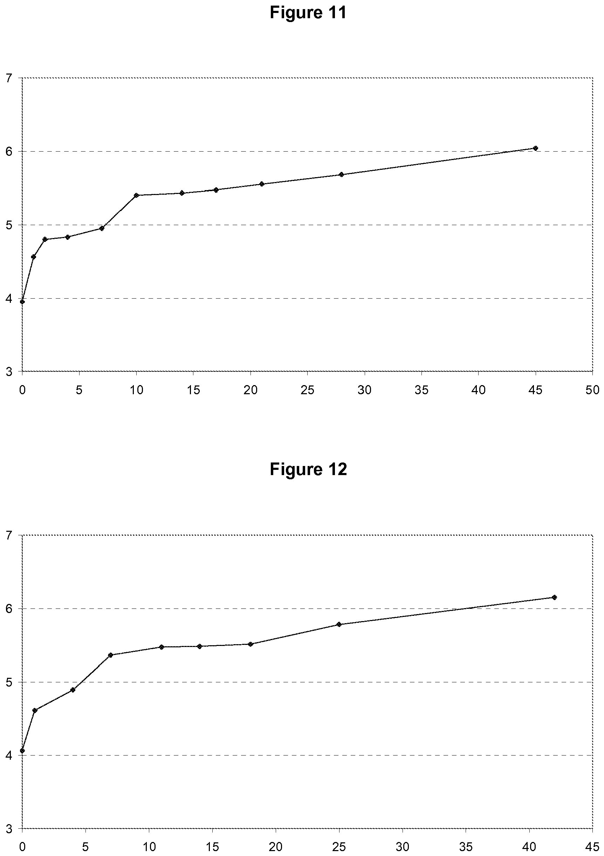

Les figures 10 à 12 représentent respectivement pour les slurries 10 à 12 maintenus à 50°C l'évolution du pH en fonction du temps (en jours). Sur ces figures, le suivi pH montre une première zone qui correspond à une augmentation très légère du pH et qui se termine à 25 jours, puis une augmentation progressive du niveau de pH qui traduit un début de déstabilisation du slurry. Néanmoins, on constate que lorsque l'on utilise la combinaison des trois agents bloquants, on parvient à obtenir une bonne stabilité du système de l'ordre de 45 jours à 50°.

## Revendications

1. Suspension aqueuse stabilisée comprenant :
- au moins un liant hydraulique comprenant un ciment alumineux et/ou un ciment sulfo-alumineux calcique et
- au moins un agent bloquant comprenant un composé contenant du phosphore choisi parmi l'acide métaphosphorique, l'acide phosphoreux, l'acide phosphorique, les acides phosphoniques et tous composés susceptibles de former l'un quelconque de ces composés par réaction avec de l'eau,
ladite suspension comprenant de 0,1% à 20% en masse de composé comprenant du phosphore par rapport à la masse totale de ciment alumineux et/ou de ciment sulfo-alumineux calcique,
ladite suspension aqueuse comprenant, en masse, par rapport à la masse totale de ladite suspension aqueuse :
- 20 à 80 % de ciment alumineux et 0 à 50% de sulfate de calcium ;
- 20 à 60 % d'eau, et
- 0 à 5 % d'additifs.

2. Suspension aqueuse stabilisée selon la revendication 1, dans laquelle les composés susceptibles de former de l'acide métaphosphorique, de l'acide phosphoreux, de l'acide phosphorique ou les acides phosphoniques sont choisis parmi : le pentoxyde de phosphore, l'acide pyrophosphorique, l'acide tripolyphosphorique, l'acide amino triméthylène phosphonique, l'acide 2-aminoéthyle phosphonique, l'acide 1-hydroxy éthylidène-1,1-diphosphonique, l'acide éthylène diamine tétraméthylène phosphonique, l'acide tétraméthylène diamine tétraméthylène phosphonique, l'acide hexaméthylène diamine tétraméthylène phosphonique, l'acide diéthylènetriamine pentaméthylène phosphonique, l'acide phosphonobutane-tricarboxylique, l'acide N-(phosphonométhyl)iminodiacétique, l'acide 2-carboxyéthyle phosphonique, l'acide 2-hydroxyphosphonocarboxylique.

3. Suspension aqueuse stabilisée selon l'une quelconque des revendications précédentes, **caractérisée en ce qu'**elle présente un pH inférieur à 9.

4. Suspension aqueuse stabilisée selon l'une quelconque des revendications précédentes, **caractérisée en ce que** le ciment alumineux est un ciment alumineux à haute teneur en alumine présentant une teneur en alumine supérieure à 60% en masse par rapport à la masse totale du ciment alumineux et **en ce que** la suspension comprend de 0,5 à 20% en masse de composé comprenant du phosphore par rapport à la masse totale de ciment alumineux à haute teneur en alumine.

5. Suspension aqueuse stabilisée selon l'une quelconque des revendications 1 à 3, **caractérisée en ce que** le ciment alumineux est un ciment alumineux à moyenne teneur en alumine présentant une teneur en alumine comprise entre 45 et 60% en masse par rapport à la masse totale du ciment alumineux et **en ce que** la suspension comprend de 2 à 20% en masse de composé comprenant du phosphore par rapport à la masse totale de ciment alumineux à moyenne teneur en alumine.

6. Suspension aqueuse stabilisée selon l'une quelconque des revendications 1 à 3, **caractérisée en ce que** le ciment alumineux est un ciment alumineux à basse teneur en alumine présentant une teneur en alumine inférieure à 45% en masse par rapport à la masse totale du ciment alumineux et **en ce que** la suspension comprend de 5 à 20% en masse de composé comprenant du phosphore par rapport à la masse totale de ciment alumineux à basse teneur en alumine.

7. Suspension aqueuse stabilisée selon l'une quelconque des revendications précédentes, **caractérisée en ce qu'**elle comprend en outre un autre agent bloquant choisi parmi les acides carboxyliques ou les acides minéraux.

8. Suspension aqueuse stabilisée selon la revendication 7, dans laquelle les acides carboxyliques sont choisis parmi l'acide citrique ; l'acide tartrique ; les acides aminés, tels que l'acide aspartique et l'acide glutamique ; l'acide mandélique ; l'acide humique ; l'acide fulvique ; l'acide quinique et les acides minéraux sont choisis parmi l'acide borique et ses sels.

9. Suspension aqueuse stabilisée selon la revendication 7 ou 8, dans laquelle l'autre agent bloquant représente de 0,3 à 9%, en masse, de la masse totale du liant hydraulique.

10. Suspension aqueuse stabilisée selon la revendication 4, **caractérisée en ce que** le ciment alumineux présente la composition chimique suivante, en masse par rapport la masse totale du ciment alumineux :
- Al₂O₃ : > 60%, de préférence de 60 - 75%,
- CaO : > 25%, de préférence de 25 - 50%,
- SiO₂ : < 5 %, de préférence < 4 % et mieux < 2 %,
- Fe₂O₃ : < 10%, de préférence de < 5 % et mieux <1 %.

11. Suspension aqueuse stabilisée selon l'une quelconque des revendications précédentes, **caractérisée en ce qu'**elle comprend, en masse, par rapport à la masse totale de ladite suspension aqueuse :
50 à 70 % de ciment alumineux et de 0 à 30 % de sulfate de calcium ;
30 à 50 % d'eau.

12. Suspension aqueuse stabilisée selon l'une quelconque des revendications précédentes, **caractérisée en ce que** l'extrait sec de la suspension aqueuse est supérieur à 50%.

13. Procédé de fabrication d'une suspension aqueuse stabilisée selon l'une quelconque des revendications 1 à 12 comprenant les étapes suivantes:
- introduction de l'eau dans une cuve de mélange,
- mise sous agitation,
- ajout du composé comprenant du phosphore,
- éventuellement ajout du ou des agents dispersants,
- ajout du ou des liants hydrauliques,
- maintien de l'agitation et,
- éventuellement ajout des autres composants,
- agitation pendant au moins 5 minutes.

14. Utilisation d'un agent bloquant pour retarder la prise d'une suspension aqueuse stabilisée comprenant un liant hydraulique comprenant au moins un ciment alumineux, **caractérisé en ce qu'**elle consiste à ajouter à ladite suspension aqueuse, au moins un agent bloquant comprenant un composé contenant du phosphore choisi parmi l'acide métaphosphorique, l'acide phosphoreux, l'acide phosphorique, les acides phosphoniques et tous composés susceptibles de former l'un quelconque de ces composés par réaction avec de l'eau, ledit composé contenant du phosphore représentant 0,1 à 20 % en masse par rapport à la masse totale de ciment alumineux,
ladite suspension aqueuse comprenant, en masse, par rapport à la masse totale de ladite suspension aqueuse :
- 20 à 80 % de ciment alumineux et 0 à 50% de sulfate de calcium ;
- 20 à 60 % d'eau, et
- 0 à 5 % d'additifs.

15. Composition liante comprenant:
(i) une suspension aqueuse stabilisée selon l'une quelconque des revendications 1 à 12 et
(ii) au moins un liant organique.

## Patentansprüche

1. Stabilisierte wässrige Suspension, umfassend:
- mindestens ein hydraulisches Bindemittel, das einen Aluminatzement und/oder einen Calciumsulfoaluminatzement umfasst, und
- mindestens ein Blockierungsmittel, das eine phosphorhaltige Verbindung umfasst, die aus Metaphosphorsäure, Phosphorigsäure, Phosphorsäure, Phosphonsäuren und allen Verbindungen, die durch Reaktion mit Wasser eine dieser Verbindungen bilden können, ausgewählt ist,
wobei die Zusammensetzung 0,1 bis 20 Gew.-% phosphorhaltige Verbindung, bezogen auf das Gesamtgewicht des Aluminatzements und/oder Calciumsulfoaluminatzements, umfasst,
wobei die wässrige Suspension, bezogen auf das Gesamtgewicht der wässrigen Suspension:
- 20 bis 80 Gew.-% Aluminatzement und 0 bis 50 Gew.-% Calciumsulfat;
- 20 bis 60 Gew.-% Wasser und
- 0 bis 5 Gew.-% Additive
umfasst.

2. Stabilisierte wässrige Suspension nach Anspruch 1, wobei die Verbindungen, die durch Reaktion mit Wasser Metaphosphorsäure, Phosphorigsäure, Phosphorsäure oder Phosphonsäuren bilden können, aus Phosphorpentoxid, Pyrophosphorsäure, Tripolyphosphorsäure, Aminotrimethylenphosphonsäure, 2-Aminoethylphosphonsäure, 1-Hydroxyethyliden-1,1-diphosphonsäure, Ethylendiamintetramethylenphosphonsäure, Tetramethylendiamintetramethylenphosphonsäure, Hexamethylendiamintetramethylenphosphonsäure, Diethylentriaminpentamethylenphosphonsäure, Phosphonobutantricarbonsäure, N-(Phosphonomethyl)iminodiessigsäure, 2-Carboxyethylphosphonsäure und 2-Hydroxyphosphonocarbonsäure ausgewählt sind.

3. Stabilisierte wässrige Suspension nach einem der vorhergehenden Ansprüche, **dadurch gekennzeichnet, dass** sie einen pH-Wert von weniger als 9 aufweist.

4. Stabilisierte wässrige Suspension nach einem der vorhergehenden Ansprüche, **dadurch gekennzeichnet, dass** es sich bei dem Aluminatzement um einen Aluminatzement mit hohem Aluminiumoxidgehalt, der einen Aluminiumoxidgehalt von mehr als 60 Gew.-%, bezogen auf das Gesamtgewicht des Aluminatzements, aufweist, handelt und dass die Suspension 0,5 bis 20 Gew.-% phosphorhaltige Verbindung, bezogen auf das Gesamtgewicht des Aluminatzements mit hohem Aluminiumoxidgehalt, umfasst.

5. Stabilisierte wässrige Suspension nach einem der Ansprüche 1 bis 3, **dadurch gekennzeichnet, dass** es sich bei dem Aluminatzement um einen Aluminatzement mit mittlerem Aluminiumoxidgehalt, der einen Aluminiumoxidgehalt zwischen 45 und 60 Gew.-%, bezogen auf das Gesamtgewicht des Aluminatzements, aufweist, handelt und dass die Suspension 2 bis 20 Gew.-% phosphorhaltige Verbindung, bezogen auf das Gesamtgewicht des Aluminatzements mit mittlerem Aluminiumoxidgehalt, umfasst.

6. Stabilisierte wässrige Suspension nach einem der Ansprüche 1 bis 3, **dadurch gekennzeichnet, dass** es sich bei dem Aluminatzement um einen Aluminatzement mit niedrigem Aluminiumoxidgehalt, der einen Aluminiumoxidgehalt von weniger als 45 Gew.-%, bezogen auf das Gesamtgewicht des Aluminatzements, aufweist, handelt und dass die Suspension 5 bis 20 Gew.-% phosphorhaltige Verbindung, bezogen auf das Gesamtgewicht des Aluminatzements mit niedrigem Aluminiumoxidgehalt, umfasst.

7. Stabilisierte wässrige Suspension nach einem der vorhergehenden Ansprüche, **dadurch gekennzeichnet, dass** sie außerdem ein weiteres Blockierungsmittel, das aus Carbonsäuren oder Mineralsäuren ausgewählt ist, umfasst.

8. Stabilisierte wässrige Suspension nach Anspruch 7, wobei die Carbonsäuren aus Citronensäure, Weinsäure, Aminosäuren, wie Asparaginsäure und Glutaminsäure, Mandelsäure, Huminsäure, Fulvinsäure und Chininsäure ausgewählt sind und die Mineralsäuren aus Borsäure und Salzen davon ausgewählt sind.

9. Stabilisierte wässrige Suspension nach Anspruch 7 oder 8, wobei das weitere Blockierungsmittel 0,3 bis 9 Gew.-%, bezogen auf das Gesamtgewicht des hydraulischen Bindemittels, ausmacht.

10. Stabilisierte wässrige Suspension nach Anspruch 4, **dadurch gekennzeichnet, dass** der Aluminatzement die folgende chemische Zusammensetzung, bezogen auf das Gesamtgewicht des Aluminatzements, aufweist:
- Al₂O₃: > 60 Gew.-%, vorzugsweise 60-75 Gew.-%,
- CaO: > 25 Gew.-%, vorzugsweise 25-50 Gew.-%,
- SiO₂: < 5 Gew.-%, vorzugsweise < 4 Gew.-% und noch besser < 2 Gew.-%,
- Fe₂O₃: < 10 Gew.-%, vorzugsweise < 5 Gew.-% und noch besser < 1 Gew.-%.

11. Stabilisierte wässrige Suspension nach einem der vorhergehenden Ansprüche, **dadurch gekennzeichnet, dass** sie, bezogen auf das Gesamtgewicht der wässrigen Suspension:
50 bis 70 Gew.-% Aluminatzement und 0 bis 30 Gew.-% Calciumsulfat;
30 bis 50 Gew.-% Wasser
umfasst.

12. Stabilisierte wässrige Suspension nach einem der vorhergehenden Ansprüche, **dadurch gekennzeichnet, dass** der Feststoffgehalt der wässrigen Suspension mehr als 50 % beträgt.

13. Verfahren zur Herstellung einer stabilsierten wässrigen Suspension nach einem der Ansprüche 1 bis 12, das die folgenden Schritte umfasst:
- Eintragen von Wasser in ein Mischgefäß,
- Rühren,
- Zugeben der phosphorhaltigen Verbindung,
- gegebenenfalls Zugeben des Dispergiermittels bzw. der Dispergiermittel,
- Zugeben des hydraulischen Bindemittels bzw. der hydraulischen Bindemittel,
- Weiterrühren und
- gegebenenfalls Zugeben weiterer Komponenten,
- Rühren über einen Zeitraum von mindestens 5 Minuten.

14. Verwendung eines Blockierungsmittels zur Verzögerung des Abbindens einer stabilsierten wässrigen Suspension, die ein hydraulisches Bindemittel, das mindestens einen Aluminatzement umfasst, umfasst, **dadurch gekennzeichnet, dass** sie darin besteht, dass man mindestens ein Blockierungsmittel, das eine phosphorhaltige Verbindung umfasst, die aus Metaphosphorsäure, Phosphorigsäure, Phosphorsäure, Phosphonsäuren und allen Verbindungen, die durch Reaktion mit Wasser eine dieser Verbindungen bilden können, ausgewählt ist, zu der wässrigen Suspension gibt, wobei die phosphorhaltige Verbindung 0,1 bis 20 Gew.-%, bezogen auf das Gesamtgewicht des Aluminatzements, ausmacht, wobei die wässrige Suspension, bezogen auf das Gesamtgewicht der wässrigen Suspension:
- 20 bis 80 Gew.-% Aluminatzement und 0 bis 50 Gew.-% Calciumsulfat;
- 20 bis 60 Gew.-% Wasser und
- 0 bis 5 Gew.-% Additive
umfasst.

15. Bindemittelzusammensetzung, umfassend:
(i) eine stabilisierte wässrige Suspension nach einem der Ansprüche 1 bis 12 und
(ii) mindestens ein organisches Bindemittel.

## Claims

1. Stabilized aqueous suspension comprising:
- at least one hydraulic binder comprising an aluminous cement and/or a calcium sulfoaluminous cement and
- at least one blocking agent comprising a phosphorus-containing compound selected from metaphosphoric acid, phosphorous acid, phosphoric acid, phosphonic acids and any compound which may form any of these compounds by reacting with water,
said suspension comprising from 0.1% to 20% by weight of phosphorus-containing compound relative to the aluminous cement and/or calcium sulfoaluminous cement total weight,
said aqueous suspension comprising by weight relative to the total weight of said aqueous suspension:
- from 20 to 80% of aluminous cement and from 0 to 50% of calcium sulfate;
- from 20 to 60% of water, and
- from 0 to 5% of additives.

2. Stabilized aqueous suspension according to claim 1, wherein the compounds which may form metaphosphoric acid, phosphorous acid, phosphoric acid or phosphonic acids are selected from: phosphorus pentoxide, pyrophosphoric acid, tripolyphosphoric acid, amino trimethylene phosphonic acid, 2-aminoethyl phosphonic acid, 1-hydroxy ethylidene-1,1-diphosphonic acid, ethylene diamine tetramethylene phosphonic acid, tetramethylene diamine tetramethylene phosphonic acid, hexamethylene diamine tetramethylene phosphonic acid, diethylene triamine pentamethylene phosphonic acid, phosphonobutane tricarboxylic acid, N-(phosphonomethyl)iminodiacetic acid, 2-carboxyethyl phosphonic acid, 2-hydroxy phosphonocarboxylic acid.

3. Stabilized aqueous suspension according to any one of the preceding claims, **characterized in that** it has a pH value lower than 9.

4. Stabilized aqueous suspension according to any one of the preceding claims, **characterized in that** the aluminous cement is an alumina high-content aluminous cement with an alumina content of more than 60% by weight relative to the aluminous cement total weight and **in that** the suspension comprises from 0.5 to 20% by weight of a phosphorus-containing compound relative to the alumina high-content aluminous cement total weight.

5. Stabilized aqueous suspension according to any one of claims 1 to 3, **characterized in that** the aluminous cement is an alumina intermediate-content aluminous cement with an alumina content ranging from 45 to 60% by weight relative to the aluminous cement total weight and **in that** the suspension comprises from 2 to 20% by weight of a phosphorus-containing compound relative to the alumina intermediate-content aluminous cement total weight.

6. Stabilized aqueous suspension according to any one of claims 1 to 3, **characterized in that** the aluminous cement is an alumina low-content aluminous cement with an alumina content of less than 45% by weight relative to the aluminous cement total weight and **in that** the suspension comprises from 5 to 20% by weight of a phosphorus-containing compound relative to the alumina low-content aluminous cement total weight.

7. Stabilized aqueous suspension according to any one of the preceding claims, **characterized in that** it further comprises another blocking agent selected from carboxylic acids or mineral acids.

8. Stabilized aqueous suspension according to claim 7, wherein the carboxylic acids are selected from citric acid; tartaric acid; aminoacids, such as aspartic acid and glutamic acid; mandelic acid; humic acid; fulvic acid; quinic acid, and the mineral acids are selected from boric acid and salts thereof.

9. Stabilized aqueous suspension according to claim 7 or 8, wherein the other blocking agent represents from 0.3 to 9% by weight of the hydraulic binder total weight.

10. Stabilized aqueous suspension according to claim 4, **characterized in that** the aluminous cement has the following chemical composition, by weight relative to the aluminous cement total weight:
- Al₂O₃: > 60%, preferably 60 - 75%,
- CaO: > 25%, preferably 25 - 50%,
- SiO₂: < 5%, preferably < 4% and more preferably < 2%,
- Fe₂O₃: < 10%, preferably of < 5% and more preferably <1%.

11. Stabilized aqueous suspension according to any one of the preceding claims, **characterized in that** it comprises, by weight relative to the total weight of said aqueous suspension:
from 50 to 70% of aluminous cement and from 0 to 30% of calcium sulfate;
from 30 to 50% of water.

12. Stabilized aqueous suspension according to any one of the preceding claims, **characterized in that** the aqueous suspension solid content is higher than 50%.

13. Method for preparing a stabilized aqueous suspension according to any one of claims 1 to 12 comprising the following steps :
- introducing water into a mixing tank,
- stirring,
- adding the phosphorus-containing compound,
- optionally adding the one or more dispersant(s),
- adding the one or more hydraulic binder(s),
- maintaining the stirring and,
- optionally adding the other components,
- stirring for at least 5 minutes.

14. Use of a blocking agent for retarding the setting of a stabilized aqueous suspension comprising a hydraulic binder comprising at least one aluminous cement, **characterized in that** it consists in adding to said aqueous suspension at least one blocking agent comprising a phosphorus-containing compound selected from metaphosphoric acid, phosphorous acid, phosphoric acid, phosphonic acids and any compound which may form any of these compounds by reacting with water, said phosphorus-containing compound representing from 0.1 to 20% by weight relative to the aluminous cement total weight,
said aqueous suspension comprising by weight relative to the total weight of said aqueous suspension:
- from 20 to 80% of aluminous cement and from 0 to 50% of calcium sulfate;
- from 20 to 60% of water, and
- from 0 to 5% of additives.

15. Binding composition comprising:
(i) a stabilized aqueous suspension according to any one of claims 1 to 12 and
(ii) at least one organic binder.
